Europäisches Patentamt

European Patent Office

Office européen des brevets

(11) Publication number: **0 206 401**
**A1**

## EUROPEAN PATENT APPLICATION

(21) Application number: 86201009.7

(22) Date of filing: 11.06.86

(51) Int. Cl.⁴: **H04N 1/40**

(30) Priority: 27.06.85 NL 8501844

(43) Date of publication of application:
**30.12.86 Bulletin 86/52**

(84) Designated Contracting States:
**AT BE CH DE FR GB IT LI NL SE**

(71) Applicant: **Océ-Nederland B.V.**
**St. Urbanusweg 43**
**NL-5914 CC Venlo(NL)**

(72) Inventor: **Waaijer, Martinus Johannes Maria**
**Marijkelaan 27**
**NL-6074 AP Melick(NL)**

(54) **Method of enlarging/reducing a dithered image.**

(57) 1. A method of enlarging/reducing a dithered image obtained from a rastered gray level image by means of a dither matrix, consisting of the following steps:

    a) reconstruction of the gray level image from the dithered image,

    b) enlargement/reduction of the gray level image resulting from step a), and

    c) dithering the enlarged/reduced gray level image resulting from step b) by means of a dither matrix.

    This method is easily carried out and avoids Moiré distortion without increasing the signal/noise ratio.

EP 0 206 401 A1

## Method of enlarging/reducing a dithered image

This invention relates to a method of enlarging/reducing a dithered image obtained from a rastered gray level image by means of a dither matrix.

Methods of dithering analog image information are known per se. In these methods, an image for dithering is scanned dot by dot by suitable means and the gray level of each dot is determined. The resulting raster of gray levels is then subdivided into contiguous sub-rasters, the dimensions of which correspond to those of a dither matrix filled by an arbitrarily preselected distribution of all the gray level thresholds possible within a sub-raster. In each sub-raster the gray level of each raster dot is then compared with the corresponding threshold from the dither matrix. If the gray level is greater that the threshold, the associated raster dot is allocated a logic "1" while if the gray level is lower than the threshold the associated raster dot is allocated a logic "0". In this way the analog image information is converted into a raster of two-level pixels or picture elements by means of which, for example, it is possible to control a printer to display the image, or by means of which the image information can be transmitted over transmission lines, e.g. in facsimile applications.

In many cases it is necessary or desirable to be able to enlarge or reduce the image whose information is present in dithered form. In the case of facsimile transmission, reduction may be desirable in order to reduce the number of bits for transmission and hence the required transmission line bandwidth. In displaying an image using the dither information it may be necessary to adapt the information to the resolution of the printer in such a way that the resulting print has a predetermined size.

Methods are already known for enlarging/reducing a dithered image, e.g. from US-A-4,394,693. In these known methods, the enlargement or reduction is obtained by repectively adding pixels to, or omitting them from, the original dithered image. If a more or less uniform structure is used for the removal or addition of the pixels, Moiré distortion occurs and/or loss of gray levels. If a random structure is used, then although quality is improved in the reduced/enlarged image inasmuch as the Moiré distortion is more or less reduced, the noise in the image increases visibly so that optimum results are certainly not obtained.

The invention has as its object to indicate a way in which a dithered image can be reduced/enlarged without the above mentioned disadvantages.

In a method of the type referred to in the preamble, this object is achieved according to the invention by the following steps:

a) reconstruction of the gray level image from the dithered image,

b) enlargement/reduction of the gray level image resulting from step a), and

c) dithering the enlarged/reduced gray level image resulting from step b) by means of a dither matrix.

In the method according to the invention, the actual enlargement/reduction is therefore carried out on a gray level image and not on a dithered image. Various algorithms have already long been known for the enlargement/reduction of a gray level image, and they operate satisfactorily of themselves and do not result in the above disadvantages such as the formation of Moiré patterns or the loss of gray levels.

Each of the steps of the method according to the invention will be explained in greater detail hereinbelow.

A method of reconstructing the gray level image from a dithered image, which can be used in step a) of the method according to the invention, is described in the patent application NL-A-8501846 of applicants, which application is not a prior publication. According to this reconstruction method, the gray level for each picture element is determined by counting the number of pixels having the value 1 in a closed area around the picture element under consideration, said area containing a number of pixels equal to the number of different thresholds in the dither matrix and each pixel being obtained by dithering with a different threshold, and equating the sum of said number of pixels having the value of 1 with the gray level, a sum equal to 0 corresponding to full white and a sum equal to the number of picture elements in the said area corresponding to full black. For further details see the said patent application.

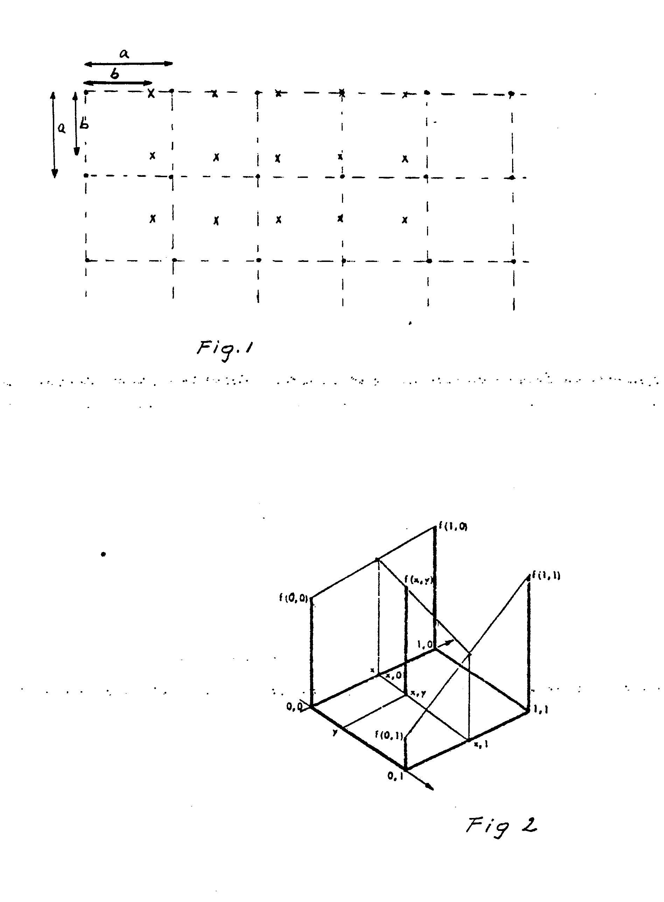

Methods of enlarging/reducing gray level images which can be used in step b) of the method according to the invention are known in various forms, as already has been started. As indicated in Fig. 1, a new image point raster with interstices b can be obtained by multiplying the image point distances by a predetermined enlargement/reduction factor b/a. This new raster now has to be converted to a next required raster by calculating the gray levels of the intermediate image points of the required raster corresponding to the raster of the original image. A suitable algorithm for determining the gray level of new image points which as a result of enlargement/reduction of the original image are situated at places different from those of the original image points is bi-linear interpolation, which will be explained in brief with reference to Fig. 2.

Fig. 2 represents part of an image raster having four image points (0,0), (0,1), (1,0) and (1,1). The length of the vertical line f(0,0), f(0,1), f(1,0) and f(1,1) plotted on each of the image points represents the gray level of the respective image point. What is now required is the value of f(x,y) associated with another image point (x,y) which is positioned in the manner illustrated between the four known image points.

It will be apparent from the Figure that:

$$f(x,0) = f(0,0) + x[f(1,0) -f(0,0)]$$

$$f(x,1) = f(0,1) + y[f(1,1) -f(0,1)]$$

$$f(x,y) = f(x,0) + y[f(x,1) -f(x,0)]$$

Substitution of the two uppermost equations in the bottom equation gives the following:

$$f(x,y) = x[f(1,0) -f(0,0)] + y[f(0,1) -f(0,0)] +$$

$$xy[f(1,1) -f(0,1) -f(1,0) + f(0,0)] + f(0,0)$$

The gray level of each point of the enlarged/reduced image can be calculated easily.

The gray levels of the image points of the enlarged/reduced image can also be determined alternatively be averaging. This alternative method will be explained hereinafter. As will be apparent from Fig. 1, the reconstructed gray level image consists of a number of picture elements of a by a, the gray level being identical throughout within each picture element. The new image point raster divides the reconstructed gray level image into a number of sub-images of b by b.

Each sub-image belongs to an image point of the enlarged/reduced gray level image. The average gray level of the sub-image proves to be a good measure of the gray level of the image point associated with the sub-image. This average is obtained by integration of the gray levels over the area of b by b defined by the sub-image and then dividing the integration result by the area $b^2$.

If the gray level has to be reduced to such an extent that the sub-images contain a large number of picture elements of the reconstructed gray level image, determination of the gray level by averaging is preferable to gray level determination by bi-linear transformation.

The reason for this is that in bi-linear transformation only four gray levels of the reconstructed gray level image are used for determination of the gray levels of the enlarged/reduced image. In the case of averaging, however, all the gray levels occurring in the sub-image are used, so that any high-frequency image information possibly being present in the reconstructed gray level image has little effect on the image quality of the reduced image in the case of gray level determination by averaging. This is in contra-distinction to the gray level determination by bi-linear transformation, in which if high-frequency image information is present the gray level will be determined incorrectly relatively frequently due to the considerable effect of an individual picture element.

Methods of dithering the gray level image in step c) of the method according to the invention are sufficiently known per se and accordingly require no further explanation.

## Claims

1. A method of enlarging/reducing a dithered image obtained from a rastered gray level image by means of a dither matrix, characterised by the following steps:
   a) reconstruction of the gray level image from the dithered image,
   b) enlargement/reduction of the gray level image resulting from step a), and
   c) dithering the enlarged/reduced gray level image resulting from step b) by means of a dither matrix.

2. A method according to claim 1, characterised in that in step a) the gray level for each picture element in a dithered image is determined by counting the number of pixels having the value 1 in a closed area around the picture element under consideration, said area containing a number of pixels equal to the number of different thresholds in the dither matrix and each pixel being obtained by dithering with a different threshold, and equating the sum of said number of pixels having the value of 1 with the gray level, a sum equal to 0 corresponding to full white and a sum equal to the number of picture elements in the said area corresponding to full black.

3. A method according to claim 1 or 2, characterised in that a bi-linear interpolation known per se is used in step b) for enlargement/reduction of the gray level image.

4. A method according to claim 1 or 2, characterised in that for the purpose of performing step b),
   1) the reconstructed gray level image is divided into a number of equal sub-images in accordance with a specific raster,
   2) each sub-image is allocated an image point of the enlarged/reduced image in a manner in which the mutual ordering of the image points corresponds to the matual ordering of the sub-images,

3) the average gray level within each sub-image is determined, and

4) the determined average gray level of each sub-image is allocated to the image point corresponding to this sub-image.

Fig. 1

Fig 2

1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 024 902  (XEROX)<br>* Page 1, line 13 - page 3, line 12; page 5, lines 1-13 * | 1 | H 04 N   1/40 |
| Y | | 2-4 | |
| | --- | | |
| A | IEEE TRANSACTIONS ON COMMUNICATIONS, vol. COM-29, no. 12, December 1981, pages 1898-1925, IEEE, New York, US; J.C. STOFFEL et al.: "A survey of electronic techniques for pictorial image reproduction"<br>* Page 1906, right-hand column, lines 3-19; page 1916, right-hand column, paragraphs 2-4 * | 1 | |
| | --- | | **TECHNICAL FIELDS SEARCHED (Int. Cl.4)** |
| Y | EP-A-0 065 281  (HELL)<br>* Page 3, line 24 - page 6, line 12 * | 2-4 | H 04 N   1/00 |
| | --- | | |
| Y | US-A-4 075 663  (WELLENDORF)<br>* Column 2, lines 10-27,63-68; column 5, line 18 - column 6, line 61 * | 3 | |
| | ---          -/- | | |

The present search report has been drawn up for all claims

| Place of search | Date of completion of the search | Examiner |
|---|---|---|
| THE HAGUE | 23-09-1986 | DE ROECK A.F.A. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | XEROX DISCLOSURE BULLETIN, vol. 4, no. 6, November/December 1979, pages 805-807, Stamford, Connecticut, US; J.L. POTTER: "A density preserving digital image magnifier/reducer" <br> * Page 806, paragraphs 1-4 * | 4 | |

-----

TECHNICAL FIELDS SEARCHED (Int. Cl.4)

The present search report has been drawn up for all claims

| Place of search | Date of completion of the search | Examiner |
|---|---|---|
| THE HAGUE | 23-09-1986 | DE ROECK A.F.A. |